Europäisches Patentamt

European Patent Office

Office européen des brevets

(19)

(11) **EP 0 817 336 B1**

(12) **FASCICULE DE BREVET EUROPEEN**

(45) Date de publication et mention
de la délivrance du brevet:
**23.01.2002 Bulletin 2002/04**

(51) Int Cl.[7]: **H01S 3/06**, H01S 3/11

(21) Numéro de dépôt: **97401494.6**

(22) Date de dépôt: **26.06.1997**

(54) **Microlaser à fortes concentrations en ions actifs comprenant une couche d'absorbant saturable et son procédé de fabrication**

Mikrolaser mit sättigbarem Absorber und hoher Konzentration von aktiven Ionen und dessen Herstellungsverfahren

Microlasers comprising saturable absorber and having high active ions concentrations and its fabrication processes

(84) Etats contractants désignés:
**DE FR GB IT**

(30) Priorité: **28.06.1996 FR 9608103**

(43) Date de publication de la demande:
**07.01.1998 Bulletin 1998/02**

(73) Titulaire: **COMMISSARIAT A L'ENERGIE ATOMIQUE**
**75015 Paris Cédex 15 (FR)**

(72) Inventeurs:
• **Fulbert, Laurent**
**38500 Voiron (FR)**
• **Molva, Engin**
**38000 Grenoble (FR)**
• **Ferrand, Bernard**
**38340 Voreppe (FR)**

(74) Mandataire: **Signore, Robert et al**
**c/o BREVATOME 3, rue du Docteur Lanceraux**
**75008 Paris (FR)**

(56) Documents cités:
EP-A- 0 653 824    US-A- 4 797 893
US-A- 5 394 413    US-A- 5 414 724

• SHEPHERD D P ET AL: "A low threshold, room temperature 1.64 mu m Yb:Er:Y/sub 3/Al/sub 5/O/sub 12/ waveguide laser" JOURNAL OF APPLIED PHYSICS, 1 DEC. 1994, USA, vol. 76, no. 11, ISSN 0021-8979, pages 7651-7653, XP000501631

• PELENC D ET AL: "High slope efficiency and low threshold in a diode-pumped epitaxially grown Yb:YAG waveguide laser" OPTICS COMMUNICATIONS, 1 APRIL 1995, NETHERLANDS, vol. 115, no. 5-6, ISSN 0030-4018, pages 491-497, XP002027187

• GAVRILOVIC P ET AL: "HIGH-POWER, SINGLE-FREQUENCY DIODE-PUMPED ND:YAG MICROCAVITY LASERS AT 1.3 M" APPLIED PHYSICS LETTERS, vol. 65, no. 13, 26 septembre 1994, pages 1620-1622, XP000470294

• ZAYHOWSKI J J ET AL: "TM:YVO4 MICROCHIP LASER" APPLIED OPTICS, vol. 34, no. 3, 20 janvier 1995, pages 435-437, XP000486698

• ZAYHOWSKI J J: "PICOSECOND Q-SWITCHED MICROCHIP LASERS" PROCEEDINGS OF THE LASERS AND ELECTRO-OPTICS SOCIETY ANNUAL MEETING (LEOS), SAN JOSE, NOV. 15 - 18, 1993 CO-LOCATED WITH OPTCON '93, no. -, 15 novembre 1993, INSTITUTE OF ELECTRICAL AND ELECTRONICS ENGINEERS, page 683/684 XP000467174

• FAN T Y: "APERTURE GUIDING IN QUASI-THREE-LEVEL LASERS" OPTICS LETTERS, vol. 19, no. 8, 15 avril 1994, pages 554-556, XP000440033

• GAVRILOVIC ET AL: 'Temp.-tunable, single frequency microcavity lasers fabricated from flux-grown YCeAG:Nd' APPL. PHYS. LETT. vol. 60, no. 14, 06 Avril 1992, page 1652

• GRABMEIER ET AL: 'LPE of Nd Doped YAG Layers by the Dipping Technique' JOURNAL OF CRYSTAL GROWTH vol. 34, 1976, pages 280 - 284

- **BONNER ET AL: 'Epitaxial Growth of Garnets for Thin Film Lasers' JOURNAL OF ELECTRONIC MATERIALS vol. 3, no. 1, 1974, pages 193 - 208**

**Description**

Domaines techniques et art antérieur

L'invention concerne le domaine des cavités microlasers, dont le milieu actif est solide.

La structure d'un microlaser est celle d'un empilement de multicouches.

Le milieu actif laser est constitué par un matériau de faible épaisseur (entre 150-1000 µm) et de petites dimensions (quelques mm$^2$), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de la microélectronique autorise une production de masse de ces microlasers à très faible coût.

Les microlasers ont de nombreuses applications, dans des domaines aussi variés que l'industrie automobile, l'environnement, l'instrumentation scientifique, la télémétrie.

Les matériaux lasers solides, en particulier ceux destinés aux microlasers ont, pour la plupart, une structure de base dopée avec des ions actifs. Une technique connue, pour réaliser ces milieux actifs, ou matériaux lasers, est la technique de croissance cristalline "Czochralski". C'est le cas notamment, pour le matériau laser YAG dopé au néodyme (YAG:Nd$^{3+}$).

D'une manière générale, le dopage du matériau de base avec les ions actifs est réalisé à une concentration n'excédant pas 1,1 à 1,3%. En raison des limitations physiques (problèmes de ségrégation) de la méthode de croissance Czochralski, il n'est pas possible d'obtenir des concentrations supérieures, en particulier dans les cristaux lasers YAG ou YLF dopés au néodyme (Nd).

L'article de J.J. Zayhowski et al. intitulé "Diode-pumped microchip lasers electro-optically Q-switched at high pulse repetition rates" paru dans Optics Letters, vol. 17, n° 17, p. 1201-1203, September 1, 1992, cite un taux de dopage de 1,8%, pour un laser YAG:Nd, mais il ne décrit aucune technique qui permette de réaliser un tel cristal laser.

Les microlasers sont, quant à eux, fabriqués à partir de substrats de matériaux lasers solides de grande dimension. Mais les substrats utilisés présentent les limites, exposées ci-dessus, en ce qui concerne leur concentration. Il en résulte un faible coefficient d'absorption à la longueur d'onde du faisceau de pompage optique du matériau laser.

En particulier, le rapport entre la puissance absorbée et la puissance incidente est donnée par $\eta=1-e^{-\alpha L}$, où $\alpha$ est le coefficient d'absorption et L la longueur du microlaser. La valeur du coefficient d'absorption est typiquement de 3,5 cm$^{-1}$. La longueur d'absorption (longueur au bout de laquelle 63% du faisceau de pompage est absorbé, égale à l'inverse du coefficient d'absorption) est de 2,8 mm. Par exemple, pour un microlaser d'épaisseur 500 µm, épaisseur qui est souvent réalisée lorsqu'on veut un microlaser monomode longitudinal, la puissance de pompe absorbée dans le microlaser lors d'un passage du faisceau de pompage ne représente que 16% de la puissance incidente. Le reste n'est pas absorbé et n'est donc pas utile à l'effet laser.

Comme il a été dit ci-dessus, il n'est pas possible d'augmenter la concentration en ions dopants, du fait de la technique de croissance utilisée.

Une solution à ce problème pourrait consister à accroître la longueur du microlaser. Par exemple, en passant de 500 µm à 2,8 mm, qui est la longueur d'absorption, la puissance absorbée pour un microlaser YAG:Nd passe de 16% à 63%. Par contre, un microlaser YAG:Nd de longueur 2,8 mm n'a plus un fonctionnement monomode car plusieurs modes Fabry-Pérot de la cavité se trouvent à l'intérieur de la bande de gain du matériau. De plus, une cavité laser de 2,8 mm ne peut plus réellement être considérée comme une cavité microlaser et peut être instable dans une configuration de cavité plan-plan.

Par conséquent, la solution consistant à augmenter la longueur du milieu laser n'est pas satisfaisante.

Dans le cas des microlasers, en particulier à milieu actif YAG ou YLF dopés au néodyme, on cherche à obtenir simultanément un fonctionnement monofréquence et un rendement de pompage amélioré (l'absorption du faisceau de pompage est proportionnelle à la concentration en dopant). Si on considère l'exemple des microlasers YAG:Nd déclenchés passivement par absorbant saturable, en particulier par YAG:Cr$^{4+}$, on cherche à abaisser les seuls lasers, par exemple aux alentours de 100 mW.

L'article de J.G. Grabmeier et al. intitulé "Liquid Phase Epitaxy of Nd$^{3+}$ doped YAG Layers by the Dipping Technique" paru dans Journal of Crystal Growth, vol. 17, p. 280-284, 1976, décrit la croissance d'une couche Nd: YAG avec une concentration de 8,7 pourcent en fraction atomique obtenue par épitaxie en phase liquide.

Exposé de l'invention

La technique d'épitaxie en phase liquide permet d'augmenter la concentration en ions actifs dans le cristal. Le coefficient d'absorption du milieu laser s'en trouve augmenté dans le même rapport. Il est alors possible de réaliser des milieux actifs laser à fort rendement, à faible seuil, même avec des épaisseurs faibles. Ce procédé est donc particulièrement intéressant pour réaliser les microlasers, notamment monomodes. Enfin, la technique d'épitaxie en phase liquide est compatible avec les procédés de fabrication collective des microlasers, qui utilisent les techniques de la microélectronique.

L'invention a pour objet un procédé de réalisation d'une cavité microlaser selon la revendication 12.

On obtient ainsi l'élément essentiel d'une cavité microlaser déclenchée passivement, et présentant, du fait d'une concentration en ions actifs supérieure à 2%, un milieu actif laser à haut rendement et à faible seuil.

De manière particulièrement avantageuse, la couche mince d'absorbant saturable peut être réalisée par épitaxie en phase liquide : ainsi, les deux composants du microlaser, à savoir le milieu actif laser et l'absorbant saturable, sont tous deux réalisés par la même technique, elle-même compatible, comme on l'a déjà vu ci-dessus, avec les techniques de fabrication collective mises en oeuvre dans les procédés de fabrication des microlasers.

Dans le cas d'un matériau YAG:Nd$^{3+}$ (ou YLF dopé au néodyme), la concentration est comprise entre 2% et 15%, par exemple égale à, ou sensiblement égale à 12%.

L'invention a également pour objet une cavité microlaser selon la revendication 1 ou 2.

Comme déjà décrit ci-dessus, le matériau actif laser est obtenu par épitaxie en phase liquide. L'épitaxie est réalisée sur un substrat, qui présente une structure cristalline proche de celle, ou identique à celle, du matériau de base du milieu actif laser. La cavité microlaser peut donc elle-même comporter le substrat sur lequel l'épitaxie du milieu actif laser a été réalisée. Ce substrat peut également avoir été supprimé.

Dans le cas de moyens de déclenchement passifs, un mode de réalisation particulièrement intéressant consiste en un absorbant saturable, susceptible d'avoir été déposé par épitaxie en phase liquide, directement sur le milieu actif.

Les moyens de déclenchement passifs peuvent comporter une couche mince d'absorbant saturable, d'épaisseur inférieure à 400 µm ou 500 µm.

Ces caractéristiques permettent d'obtenir des absorbants saturables intracavité, compatibles avec les tailles des microlasers usuellement mis en oeuvre.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- les figures 1 et 2 représentent des structures de cavité microlaser,
- la figure 3A est une cavité microlaser avec absorbant saturable et intracavité,
- la figure 3B est encore une cavité microlaser avec microlentille pour stabiliser la cavité,
- la figure 3C est une cavité microlaser selon l'invention, avec absorbant saturable au milieu de la cavité,

- la figure 4 est un exemple de structure microlaser avec déclenchement actif,
- les figures 5A à 5E représentent des étapes de fabrication d'un microlaser selon l'invention,
- les figures 6A et 6B représentent un microlaser selon l'invention, avec ses moyens de pompage optique et le, ou les, boîtier(s) de support des différents éléments.

Exposé détaillé de modes de réalisation de l'invention

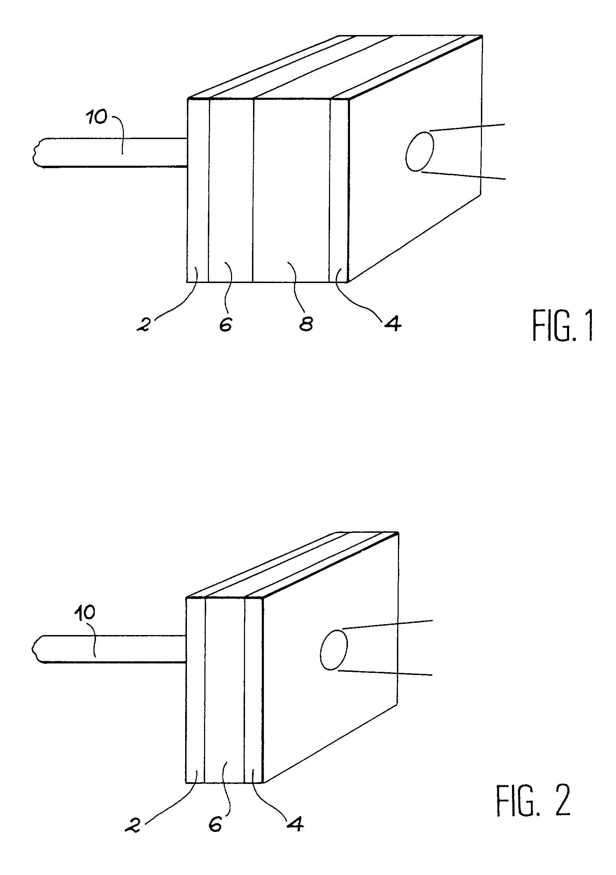

Un premier exemple d'une structure de microlaser est illustré sur la figure 1. Cette structure comporte deux miroirs d'entrée et de sortie 2, 4 de la cavité microlaser, ainsi qu'un milieu actif laser 6, fortement dopé, avec une concentration en ions actifs supérieure à 1,5% ou à 2% (pourcentage en masse) . Dans le cas où le milieu actif laser 6 est obtenu par croissance par épitaxie en phase liquide sur un substrat d'épitaxie, la cavité microlaser comporte également un substrat d'épitaxie 8 intracavité. En fait, le substrat 8 du milieu actif laser 6 ne se différencie que par les différents dopants qui affectent les propriétés optiques du milieu actif laser 6.

Il est également possible de supprimer le substrat 8, après réalisation de l'épitaxie, par exemple par une étape de polissage. Dans ce cas, on obtient la structure de microlaser illustrée sur la figure 2 : le microlaser comporte uniquement les miroirs d'entrée 2 et de sortie 4 de la cavité, ainsi que le milieu actif laser 6, fortement dopé.

Sur les figures 1 et 2, la référence 10 désigne un faisceau de pompage, par exemple un faisceau d'une diode de pompage, du type diode laser III-V.

Le matériau actif laser consiste essentiellement en un matériau de base dopé avec des ions actifs laser.

Le matériau cristallin de base peut être choisi parmi l'un des matériaux suivants : YAG ($Y_3Al_5O_{12}$), $YVO_4$, YSO ($Y_2SiO_5$), YLF ($YLiF_4$) ou $GDVO_4$, etc. Des critères de choix pour l'un ou l'autre de ces matériaux sont donnés dans le document EP-653 824 (document US-5 495 494). Ce document donne également les indications sur le choix de l'épaisseur e du milieu actif laser ; en particulier pour obtenir un laser monomode ; typiquement, l'épaisseur du milieu actif est de l'ordre de :

- 750 µm pour un milieu actif YAG,
- 500 µm pour un milieu actif $YVO_4$.

En ce qui concerne les ions dopants, on choisit en général du néodyme (Nd) pour une émission laser autour de 1,06 µm. On peut également choisir de l'erbium (Er) ou un codopage erbium-ytterbium (Er+Yb) pour une émission autour de 1,5 µm. Pour une émission autour de 2 µm, on choisit du thulium (Tm) ou de l'holmium (Ho) ou un codopage thulium-holmium. Le dopage à l'ytterbium seul permet d'obtenir une émission à 1,03 μm.

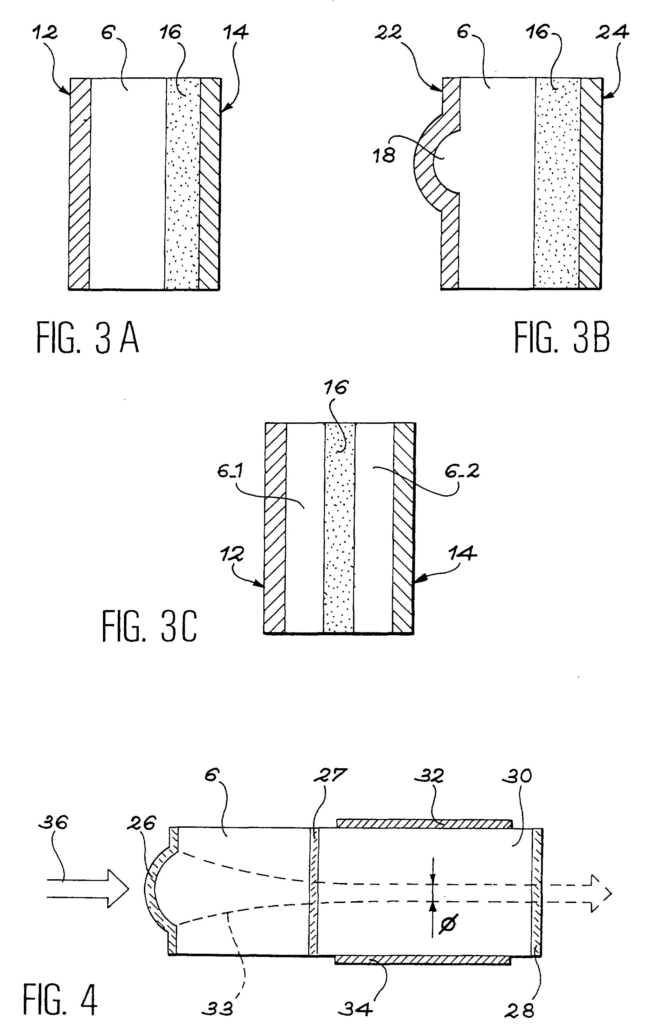

Les figures 3A à 3C sont des représentations, en coupe, de cavités microlasers avec un matériau laser solide, dopé à une concentration supérieure à 1,5% ou à 2%. Dans les trois cas représentés, le substrat d'épitaxie 8 a été supprimé par polissage. Il reste donc le milieu actif laser 6, 6-1, 6-2, fortement dopé, les miroirs d'entrée 12, 14 et de sortie 22, 24 de la cavité. Un autre élément est également présent à l'intérieur de la cavité microlaser : il s'agit d'un élément absorbant saturable 16. L'absorbant saturable est une couche mince de matériau absorbant saturable, directement déposée sur le milieu actif solide 6. Dans la mesure où ce dernier est réalisé par épitaxie en phase liquide, un procédé de réalisation particulièrement intéressant, pour cette couche d'absorbant saturable, est l'épitaxie en phase liquide. Dans ce cas, la couche 16 est composée d'un matériau de base, identique à celui du milieu actif solide 6, et dopé avec des ions lui conférant des propriétés d'absorbant saturable, par exemple des ions chrome ($Cr^{4+}$) ou erbium ($Er^{3+}$). Ainsi, on peut obtenir une couche d'absorbant saturable, directement déposée sur le milieu actif laser, et d'épaisseur au maximum égale à 400 μm. Toutes les informations nécessaires à la réalisation d'une telle couche d'absorbant saturable sont données dans le document EP-653 824 (US-5 495 494). Le document US-A-5 394 413 décrit un microlaser comportant une couche d'absorbant saturable et un matériau actif laser obtenue par épitaxie et comportant un matériau Nd: YAG. En particulier, il est également possible de réaliser un dépôt d'absorbant saturable de part et d'autre du milieu actif laser 6, et d'obtenir une cavité microlaser avec deux couches de matériau absorbant saturable directement déposées sur le milieu actif laser. Il est également possible de réaliser des microlentilles 18 en un matériau transparent (par exemple en silice) sur la surface du matériau actif laser 6. Là encore, toutes les informations nécessaires à la réalisation de ces microlentilles sont données dans le document EP-653 824. Les microlentilles permettent de stabiliser la cavité microlaser.

Les structures des figures 3A à 3C peuvent également être réalisées avec un substrat 8 intracavité : ce substrat est compatible avec un dépôt d'absorbant saturable 16 par épitaxie en phase liquide.

Dans le cas de la figure 3C qui représente une cavité microlaser selon l'invention, le positionnement de l'absorbant saturable au milieu de la cavité facilite la sélection de modes de la cavité.

Le matériau actif laser d'une cavité microlaser peut être également associé à des moyens de déclenchement actifs, disposés à l'intérieur de la cavité. Ce mode de réalisation est illustré sur la figure 4, où la référence 6 désigne toujours le milieu actif laser, fortement dopé, et où la cavité est limitée par des miroirs d'entrée 26 et de sortie 28 du milieu actif laser. En fait, un miroir intermédiaire 27 délimite deux cavités : une première cavité résonnante est constituée par le milieu actif laser, et une seconde cavité résonnante par un matériau 30 possédant un indice susceptible de varier en fonction de perturbations extérieures. Ce matériau 30 peut être un matériau électrooptique, tel que du $LiTaO_3$, auquel on applique une différence de potentiel à l'aide de deux électrodes de contact 32, 34. Un faisceau de pompage 36 est dirigé sur le miroir d'entrée 26. Le miroir 26, concave, permet d'assurer une réduction de la taille du faisceau laser dans le milieu électrooptique 30. Les conditions relatives au rayon de courbure de ce miroir, et le procédé pour réaliser la structure de la figure 4 sont donnés dans le document FR-95 00767 (US-08-587 477).

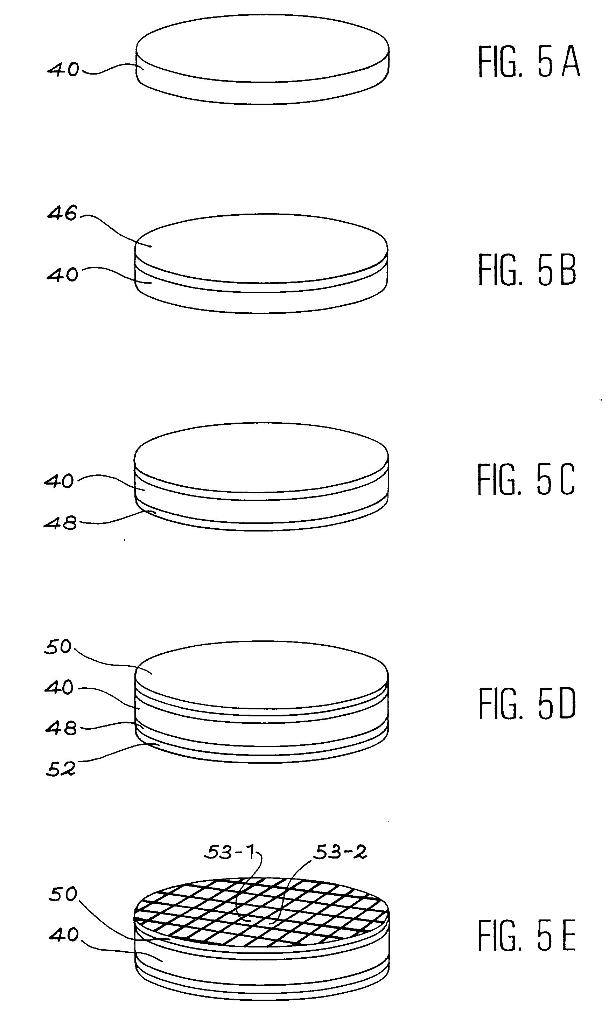

Les figures 5A à 5E illustrent des étapes de mise en oeuvre d'un procédé, pour fabriquer un microlaser selon l'invention.

Dans une première étape (figure 5A) un substrat 40 de matériau laser poli, double face, dopé ou non dopé en ions actifs, est sélectionné. Du fait des particularités de la technique d'épitaxie en phase liquide, ce substrat est de préférence constitué d'un matériau identique au matériau de base du milieu actif laser que l'on veut réaliser. Ainsi, si ce dernier est du type YAG:$Nd^{3+}$, on sélectionne un substrat en YAG.

Puis, dans une deuxième étape (figure 5B) il est procédé à l'épitaxie en phase liquide du matériau laser 46, à fort dopage. Avec cette technique, il est possible d'obtenir des concentrations en ions actifs supérieures à 1,5% ou à 2%, par exemple situées dans les gammes 1,5-15% ou 2-15% (pourcentage en masse). En particulier, dans le cas du YAG:Nd, il est possible d'obtenir des concentrations en néodyme, jusqu'à 15% (par exemple : 12%). Des expériences réalisées en laboratoire ont montré qu'on pouvait augmenter d'un facteur 5 le coefficient d'absorption du YLF:Nd en le faisant croître par épitaxie en phase liquide. Ceci correspond à une concentration en néodyme de l'ordre de 5%. Comme dans le cas précédent, des concentrations en Nd comprises entre 2% et 15% peuvent être obtenues. Toutes ces valeurs sont bien supérieures aux concentrations usuellement obtenues par tirage Czochralski. L'épaisseur du milieu actif 46 obtenu peut être facilement contrôlée, par exemple de manière à obtenir une cavité microlaser monomode. Le document EP-653 824 donne des indications sur les épaisseurs de matériau actif ou de la cavité microlaser pour réaliser une cavité monomode. Le milieu actif obtenu subit ensuite une opération de polissage.

L'épitaxie en phase liquide est une technique de croissance en solution. Aussi, lors de la croissance d'un cristal substitué, c'est la solubilité des différentes espèces dans la solution qui va jouer sur la concentration des substitutions dans le cristal.

Lorsque l'on utilise une technique classique, du type bain fondu, le coefficient de ségrégation est très faible et on ne peut pas obtenir de cristaux fortement concentrés, en particulier dans le cas du néodyme : on doit mettre beaucoup de néodyme dans un bain pour obtenir un cristal très faiblement dopé (de l'ordre de 1,3%) et, au-delà d'une certaine limite, des phases parasites apparaissent.

Dans le cas de l'épitaxie en phase liquide, on rencontre deux limitations :

- la formation de phases parasites plus stables que le cristal. Lorsque l'on substitue les cations dans un cristal, par exemple les cations de chrome, de vanadium, ou de cobalt, ... dans des composés aluminates, silicates de terres rares, on peut constater, lorsque l'on augmente la concentration d'un substituant, l'apparition de phases parasites du type : vanadate de terres rares, ou chromate de plomb (dans le cas de bains à base de solvant PbO).

- En outre, en épitaxie en phase liquide, un second problème apparaît avec l'accord de maille couche-substrat. En effet, substituer un cation par un autre, beaucoup plus gros, augmente la maille cristalline de la couche qui devient en compression. Dans ce cas, on réalise une substitution complémentaire, par un petit cation non actif, dont on peut même calculer la concentration et la quantité, par rapport à celles du substituant, en appliquant la loi de Vegard.

Ainsi :

- dans le cas du YAG ($Y_3Al_5O_{12}$) dopé au néodyme, on peut, par épitaxie en phase liquide, faire pousser des couches fortement concentrées en néodyme, jusqu'à 15%. Dans ce cas, le paramètre de maille devient trop important et on le réajuste grâce à l'ajout d'une petite terre rare non active telle que le lutécium (à partir de 4-5% de néodyme). Ainsi, des couches lasers monocristallines de YAG:Nd, ayant des concentrations très supérieures à celles des cristaux massifs ont pu être élaborées par épitaxie en phase liquide.

- Dans le cas du YAG dopé $Cr^{4+}$, des couches par épitaxie ayant des absorptions à 1,06μm, de plusieurs dizaines de $cm^{-1}$, ont été élaborées pour réaliser un absorbant saturable (dans les cristaux massifs, on obtient généralement seulement quelques $cm^{-1}$ d'absorption). Ces couches deviennent également en forte compression et une substitution de l'yttrium par du lutécium permet de réajuster l'accord de maille. Dans ce cas, la concentration maximum en $Cr^{4+}$ est limitée par l'apparition de phases parasites du type $PbCr_5O_8$ ou $MgAl_2O_4$.

Dans une troisième étape (figure 5C), on peut déposer une couche 48 d'un matériau absorbant saturable. Ce dépôt peut être réalisé par épitaxie en phase liquide, le matériau 48 étant alors constitué d'un matériau de base, identique à celui de la couche 40, dopé avec des ions lui conférant des propriétés d'absorbant saturable.

Les deuxième et troisième étapes peuvent être répétées pour avoir une alternance de couches de matériau laser et d'absorbant saturable. Ainsi, on peut obtenir une structure selon l'invention, illustrée sur la figure 3C, où l'absorbant saturable 16 est compris entre deux couches de matériau laser 6-1 et 6-2.

L'étape suivante (figure 5D) consiste à réaliser des dépôts de miroirs d'entrée et de sortie 50, 52, de part et d'autre de l'élément obtenu au cours de l'étape précédente. Il s'agit en général de miroirs dichroïques, obtenus par un dépôt de multicouches diélectrique, procédé connu de l'homme du métier et disponible commercialement.

Ensuite (figure 5E) la structure de multicouches obtenue est découpée pour obtenir des puces microlasers. Cette découpe peut être réalisée par une scie diamantée (de type de celles qui sont utilisées en microélectronique pour la découpe des puces silicium). Ainsi, on peut obtenir des puces laser 53-1, 53-2,..., et de quelques $mm^2$ de section.

Conformément à ce qui a été décrit ci-dessus, on peut prévoir une étape supplémentaire, au cas où on souhaite fabriquer, sur l'une ou l'autre des faces de la structure obtenue un réseau de microlentilles. De préférence, on grave directement les microlentilles sur le matériau laser, en utilisant des techniques utilisées couramment en microélectronique.

Lors du polissage effectué après épitaxie en phase liquide du matériau laser, il est possible d'éliminer le substrat 40 sur lequel l'épitaxie a été réalisée. Ainsi, on ne conserve qu'une couche épitaxiée fortement dopée.

Dans tous les cas, la structure obtenue ne nécessite, à aucun moment, l'alignement optique des différents composants. Par ailleurs, elle n'introduit aucune colle optique.

Le pompage de la cavité est préférentiellement un pompage optique. Ainsi, les diodes laser III-V sont particulièrement bien adaptées pour pomper une cavité microlaser.

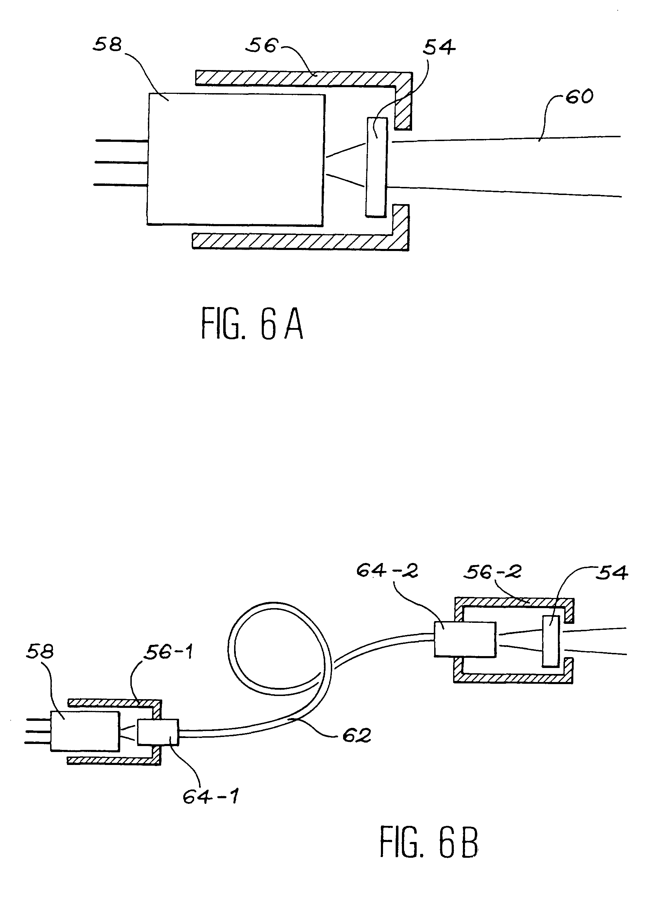

Comme illustré sur la figure 6A, une cavité microlaser 54 obtenue comme décrit ci-dessus peut être montée dans un boîtier mécanique 56, prévu pour recevoir également la diode laser de pompage 58. La référence 60 représente le faisceau laser, continu ou en impulsion, obtenu. Selon un autre mode de réalisation (figure 6B), il est possible de prévoir deux boîtiers séparés 56-1 et 56-2 : l'un pour recevoir la cavité microlaser 54, l'autre pour recevoir la diode laser de pompage 58, les deux boîtiers étant reliés par une fibre optique 62, à l'aide de connecteurs 64-1 et 64-2 prévus dans chacun des boîtiers.

La technique de réalisation d'un matériau laser et de microlasers selon l'invention permet d'obtenir des concentrations élevées en ions actifs, dans un substrat cristallin : ces concentrations sont supérieures à 1,5% ou à 2%. Par exemple, on obtient des concentration sensiblement égales, ou égales, à : 3%, 4%, 5%, 8%, 9%, 10%, 11%. Cependant, il n'est pas forcément intéressant d'augmenter la concentration jusqu'à des valeurs supérieures à 12 ou 13%.

En effet, si l'on considère le rendement différentiel du microlaser (c'est-à-dire la pente de la courbe, qui donne la puissance du faisceau laser obtenu en fonction de la puissance du faisceau de pompage incident), celui-ci est directement proportionnel au taux d'absorption $\eta = 1 - e^{-\alpha L}$, où L est la longueur du milieu absorbant laser et $\alpha$ le coefficient d'absorption. Si l'on considère cette seule équation, il est clair qu'on a intérêt à choisir une concentration la plus forte possible.

Par contre, lorsque la concentration est très élevée, les effets d'auto-extinction de la luminescence (ou "Quenching" en terminologie anglo-saxonne) réduisent la durée de vie du niveau haut de l'ion actif qui participe à l'effet laser. Or, le seuil du laser, c'est-à-dire la puissance absorbée à partir de laquelle l'effet laser se produit, est inversement proportionnel à la durée de vie. Par conséquent, si l'on raisonne en termes de puissance incidente, le seuil $P_S$ est donné par la relation suivante :

$$P_S = k \frac{1}{\tau\left(1 - e^{-\alpha L}\right)}$$

où $\tau$, $\alpha$ et L ont la signification donnée ci-dessus et où k est une constante de proportionnalité.

Pour une épaisseur de microlaser inférieure à 1 mm, les calculs montrent que le seuil minimum est obtenu pour une concentration comprise entre 2% et 3%, valeur qu'il n'est pas possible d'obtenir par la méthode classique de croissance Czochralski.

Pour une puissance de pompe donnée, le maximum de puissance laser est obtenu pour une concentration comprise entre 3% et 12%. La concentration de 3% donne le seuil le plus faible, alors que la concentration de 12% donne le meilleur rendement différentiel.

En particulier, dans le cas d'un laser YAG:Nd, il est possible d'obtenir des concentrations en néodyme jusqu'à 12%. Par ailleurs, des expériences réalisées en laboratoire ont montré qu'on pouvait augmenter d'un facteur 5 le coefficient d'absorption du YLF dopé au néodyme, en faisant croître la structure cristalline par épitaxie en phase liquide. Cela correspond à une concentration en néodyme de l'ordre de 5%, ce qui est bien supérieur à la concentration de 1% que l'on atteint communément par tirage Czochralski.

## Revendications

1. Cavité microlaser comportant un miroir d'entrée (2, 12, 22, 26), un miroir de sortie (4, 14, 24, 28) et un milieu actif laser (6) obtenu en épitaxie en phase liquide et comportant un matériau cristallin YAG, dopé avec des ions néodyme ($Nd^{3+}$) à une concentration comprise entre 2% et 15% en masse, la cavité microlaser comportant une première couche (6-1) de milieu actif laser, une couche d'absorbant saturable (16), une seconde couche de milieu actif laser (6-2), la couche d'absorbant saturable étant située au milieu, ou sensiblement au milieu, de la cavité microlaser.

2. Cavité microlaser comportant un miroir d'entrée (2, 12, 22, 26), un miroir de sortie (4, 14, 24, 28) et un milieu actif laser (6) obtenu en épitaxie en phase liquide et comportant un matériau cristallin $YLiF_4$ dopé avec des ions néodyme à une concentration comprise entre 2% et 15% en masse, la cavité microlaser comportant une première couche (6-1) de milieu actif laser, une couche d'absorbant saturable (16), une seconde couche de milieu actif laser (6-2), la couche d'absorbant saturable étant située au milieu, ou sensiblement au milieu, de la cavité microlaser.

3. Cavité microlaser selon l'une des revendications 1 ou 2, la concentration en ions néodyme étant comprise entre 5% et 15% en masse.

4. Cavité microlaser selon l'une des revendications 1 à 3, comportant en outre un substrat (8) sur lequel l'épitaxie du milieu actif laser est réalisée.

5. Cavité microlaser selon l'une des revendications 1 à 4, comportant en outre des moyens de déclenchement passif (16) de la cavité.

6. Cavité microlaser selon la revendication 5, les moyens de déclenchement passif comportant un absorbant saturable, déposé par épitaxie en phase liquide, directement, soit sur le milieu actif laser (6), soit sur un substrat sur lequel ce dernier est épitaxié.

7. Cavité microlaser selon l'une des revendications 5 ou 6, les moyens de déclenchement passif comportant une couche mince d'absorbant saturable (16), d'épaisseur inférieure à 400 $\mu$m.

8. Cavité microlaser selon l'une des revendications 1 à 7, la cavité étant monomode.

9. Cavité microlaser selon l'une des revendications 1 à 8, le milieu actif laser étant d'épaisseur inférieure à 1 mm.

10. Cavité microlaser selon la revendication 9, le milieu actif laser étant d'épaisseur inférieure à 500 $\mu$m.

**11.** Microlaser comportant une cavité microlaser selon l'une des revendications 1 à 10 et des moyens de pompage (58) de la cavité.

**12.** Procédé de réalisation d'une microcavité laser, comportant :

- une étape de réalisation d'un matériau actif laser, par croissance, par épitaxie en phase liquide, d'un matériau cristallin de base YAG ou YLiF$_4$ dans lequel des ions actifs néodyme (Nd$^{3+}$), lui conférant des propriétés laser, sont introduits à une concentration comprise entre 2% et 15% en masse,
- une étape de réalisation d'une couche mince d'absorbant saturable, directement sur le matériau actif laser préparé précédemment,

l'étape de réalisation du matériau actif laser étant répétée de manière que la couche mince d'absorbent saturable soit située au milieu, ou sensiblement au milieu, de la microcavité laser.

**13.** Procédé selon la revendication 12, la couche mince d'absorbant saturable étant réalisée par épitaxie en phase liquide.

**14.** Procédé selon l'une des revendications 12 ou 13, la concentration en ions néodyme étant comprise entre 5% et 15%.

**Patentansprüche**

**1.** Mikrolaser-Resonator mit einem Eingangsspiegel (2, 12, 22, 26), einem Ausgangsspiegel (4, 14, 24, 28) und einem aktiven Lasermedium (6), erzeugt mittels Flüssigphasen-Epitaxie, ein kristallines YAG-Material umfassend, dotiert mit Neodym-Ionen (Nd$^{3+}$) mit einer zwischen 2 und 15 Massenanteilen in % enthaltenen Konzentration, wobei der Mikrolaser-Resonator eine erste Schicht (6-1) aus aktivem Lasermedium, eine sättigbare Absorptionsschicht (16) sowie eine zweite Schicht aus aktivem Lasermedium (6-2) umfasst und die sättigbare Absorptionsschicht sich in der Mitte oder im Wesentlichen in der Mitte des Mikrolaser-Resonators befindet.

**2.** Mikrolaser-Resonator mit einem Eingangsspiegel (2, 12, 22, 26), einem Ausgangsspiegel (4, 14, 24, 28) und einem aktiven Lasermedium (6), erzeugt mittels Flüssigphasen-Epitaxie, ein kristallines YLiF$_4$-Material umfassend, dotiert mit Neodym-Ionen mit einer zwischen 2 und 15 Massenanteilen in % enthaltenen Konzentration, wobei der Mikrolaser-Resonator eine erste Schicht (6-1) aus aktivem Lasermedium, eine sättigbare Absorptionsschicht (16) sowie eine zweite Schicht aus aktivem Lasermedium (6-2) umfasst und die sättigbare Absorptionsschicht sich in der Mitte oder im Wesentlichen in der Mitte des Mikrolaser-Resonators befindet.

**3.** Mikrolaser-Resonator nach einem der Ansprüche 1 oder 2, wobei die Neodymionen-Konzentration zwischen 5 und 15 Massenanteilen in % enthalten ist.

**4.** Mikrolaser-Resonator nach einem der Ansprüche 1 bis 3, der außerdem ein Substrat (8) umfasst, auf dem man die Epitaxie des aktiven Lasermediums realisiert.

**5.** Mikrolaser-Resonator nach einem der Ansprüche 1 bis 4, der außerdem passive Güteschaltungseinrichtungen (16) des Resonators umfasst.

**6.** Mikrolaser-Resonator nach Anspruch 5, wobei die passiven Güteschaltungseinrichtungen ein sättigbares Absorptionsmaterial umfassen, abgeschieden mittels Flüssigphasen-Epitaxie, direkt, entweder auf dem aktiven Lasermedium (6) oder auf einem Substrat, auf dem dieses letztere abgeschieden ist mittels Epitaxie.

**7.** Mikrolaser-Resonator nach einem der Ansprüche 5 oder 6, wobei die passiven Güteschaltungseinrichtungen eine dünne Schicht aus sättigbarem Absorptionsmaterial (16) mit einer Dicke von weniger als 400 µm umfassen.

**8.** Mikrolaser-Resonator nach einem der Ansprüche 1 bis 7, wobei der Resonator ein Einmoden-Resonator ist.

**9.** Mikrolaser-Resonator nach einem der Ansprüche 1 bis 8, wobei das aktive Lasermedium dünner als 1 mm ist.

**10.** Mikrolaser-Resonator nach Anspruch 9, wobei das passive Lasermedium dünner als 500 µm ist.

**11.** Mikrolaser mit einem Mikrolaser-Resonator nach einem der Ansprüche 1 bis 10 und mit Pumpeinrichtungen (58) des Resonators.

**12.** Herstellungsverfahren eines Mikrolaser-Resonators, umfassend:

- einen Schritt zur Realisierung eines aktiven Lasermediums durch Aufwachsen eines kristallinen Materials auf YAG- oder YLiF$_4$-Basis mittels Flüssigphasen-Epitaxie, in das aktive Neodymionen (Nd$^{3+}$), die ihm Laser-Eigenschaften verleihen, mit einer zwischen 2 und 15 Massenanteilen in % enthaltenen Konzentration eingebracht werden,

- einen Schritt zur Realisierung einer dünnen Schicht aus sättigbarem Absorptionsmaterial, direkt auf dem vorhergehend hergestellten aktiven Lasermaterial,

  wobei der Herstellungsschritt des aktiven Lasermaterials so wiederholt wird, dass die dünne Schicht aus sättigbarem Absorptionsmaterial sich in der Mitte oder im Wesentlichen in der Mitte des Mikrolaser-Resonators befindet.

13. Verfahren nach Anspruch 12, wobei die dünne Schicht aus sättigbarem Absorptionsmaterial durch Flüssigphasen-Epitaxie erzeugt wird.

14. Verfahren nach einem der Ansprüche 12 oder 13, wobei die Neodymionen-Konzentration zwischen 5% und 15% enthalten ist.

**Claims**

1. Microlaser cavity having an input mirror (2, 12, 22, 26), an output mirror (4, 14, 24, 28) and an active laser medium (6) obtained by liquid phase epitaxy and having a YAG crystalline material doped with neodymium ions ($Nd^{3+}$) at a concentration between 2 and 15 wt.%, the microlaser cavity having a first active laser medium layer (6-1), a saturable absorber layer (16), a second active laser material layer (6-2), the saturable absorber layer being located in the centre or substantially in the centre of the microlaser cavity.

2. Microlaser cavity having an input mirror (2, 12, 22, 26), an output mirror (4, 14, 24, 28) and an active laser medium (6) obtained by liquid phase epitaxy and having a $YLiF_4$ crystalline material doped with neodymium ions at a concentration between 2 and 15 wt.%, the microlaser cavity having a first active laser medium layer (6-1), a saturable absorber layer (16), a second active laser medium layer (6-2), the saturable absorber layer being located in the centre or substantially in the centre of the microlaser cavity.

3. Microlaser cavity according to one of the claims 1 or 2, the concentration of neodymium ions being between 5 and 15 wt.%.

4. Microlaser cavity according to one of the claims 1 to 3, also having a substrate (8) on which epitaxy of the active laser medium takes place.

5. Microlaser cavity according to one of the claims 1 to 4, also having passive cavity switching means (16).

6. Microlaser cavity according to claim 5, the passive switching means incorporating a saturable absorber deposited by liquid phase epitaxy, directly either on the active laser medium (6) or on a substrate on which the latter is epitaxied.

7. Microlaser cavity according to one of the claims 5 or 6, the passive switching means incorporating a thin saturable absorber layer (16) with a thickness below 400 μm.

8. Microlaser cavity according to one of the claims 1 to 7, the cavity being monomode.

9. Microlaser cavity according to one of the claims 1 to 8, the active laser medium having a thickness below 1 mm.

10. Microlaser cavity according to claim 9, the active laser medium having a thickness below 500 μm.

11. Microlaser incorporating a microlaser cavity according to one of the claims 1 to 10 and cavity pumping means (58).

12. Process for producing a microlaser cavity involving a stage of producing an active laser material by liquid phase epitaxy growth of a YAG or $YLiF_4$-based crystalline material into which active neodymium ($Nd^{3+}$) ions giving it laser properties are introduced at a concentration between 2 and 15 wt.% and a stage of producing a saturable absorber film directly on the previously prepared active laser material, the stage of producing the active laser material being repeated in such a way that the saturable absorber film is located in the centre or substantially in the centre of the laser microcavity.

13. Process according to claim 12, the saturable absorber film being produced by liquid phase epitaxy.

14. Process according to one of the claims 12 or 13, the concentration of neodymium ions being between 5 and 15%.

FIG. 1

FIG. 2

FIG. 3 A

FIG. 3 B

FIG. 3 C

FIG. 4

40 — FIG. 5 A

46 —
40 — FIG. 5 B

40 —
48 — FIG. 5 C

50 —
40 —
48 —
52 — FIG. 5 D

53-1    53-2
50 —
40 — FIG. 5 E

FIG. 6 A

FIG. 6 B